Europäisches Patentamt

European Patent Office

Office européen des brevets

(19)

(11) Publication number: **0 463 597 A2**

# EUROPEAN PATENT APPLICATION

(12)

(21) Application number: **91110384.4**

(22) Date of filing: **24.06.91**

(51) Int. Cl.⁵: **F25D 29/00**

(30) Priority: **29.06.90 IT 6747090**

(43) Date of publication of application:
**02.01.92 Bulletin 92/01**

(84) Designated Contracting States:
**DE ES FR GB**

(71) Applicant: **MERLONI ELETTRODOMESTICI S.p.A.**
**Viale Aristide Merloni, 45**
**I-60044 Fabriano (AN)(IT)**

(72) Inventor: **Mariani, Pietro**
**Via Serraloggia 103**
**I-60044 Fabriano (AN)(IT)**

(54) **Improved command device for refrigeration appliances.**

(57) The present invention relates to an improved command device for refrigerating appliances, comprising a temperature sensor that generates an electrical value in function with the temperature of its surroundings and a regulating element in particular an electronic thermostat, that receives and elaborates the electrical value of the internal temperature of at least one of the refrigerating compartments being part of the appliance. The characterising principle of the sensor consists in the fact that the sensor is placed on the external wall of the compartment.

FIG. 2

The present invention relates to an improved command device far refrigerating appliances, comprising a temperature sensor that generates an electrical value in function with the temperature of its surroundings and a regulating element in particular an electronic thermostat, that receives and elaborates the electrical value and acts an the appliance's components that influence the value of the internal temperature of at least one of the refrigerating compartments being part of the appliance.

It is known that with refrigerating appliances various types of sensors for the detection of the compartments internal temperature are used.

In the typical solutions, that are the most commonly used, the detection of the compartments internal temperature is carried out by means of electromechanical freon expansion devices, that functions with appropriate leverage systems, directly acting upon a power switch with which the control of the refrigerating system is associated.

Such traditional solutions are being flanked more and more often by control systems of the electronic type, which use temperature sensors constituted by elements that vary their electrical conductivity in function of the temperature such as thermistors, be it the NTC type or the PTC type.

Such sensor elements are internally arranged within the compartment and therefore, so as to preserve them from humidity and guarantee an adequate electrical isolation they are appropriately industrially treated.

With this in mind, the thermistors are inserted in a cover that is then filled with a suitable resin so as to guarantee airtightness.

Apart from the intrinsic econonomics of thermistors, the difficulty of the industrialisation of said sensors, due to the slow process of the polymerization of the resin, makes the final cost rather high and thus creates a serious obstacle regarding the development of elecrtic control systems, even if they are indispensible for a correct management of refrigeration appliances with more areas of different temperatures.

The mounting of said sensors inside the compartment requires the utilisation of suitable fixing means so as to avoid the possibility of failiures due to the usage that the operator carries out when placing or removing food from the compartment.

Furthermore, protection and isolation means of the connection cables from the thermistor sensor to the thermostat are necessary, so as to avoid the possibility of failiures due to the use of the appliance or the possibilities of injuries to the user, in the case of failiures of the electrical isolation.

Infact, the international rules concerning the safety of refrigerating appliances state that the user must not be able to touch electrical parts such as cables and the alike, during the normal or abnormal use of the appliance, unless suitable provisions to avoid the danger even when it is possible to touch such parts are taken.

By abnormal use we intend a state in which during normal running, failures are noted that the user is not able to realize and increase the danger for the users safety.

Such a failure could be that of the electronic thermostat in which the electrical input of the sensor could pass from low tension to that of the mains tension.

Therefore, while the sensor and the connecting cable to the electronic thermostat are mounted inside the compartment and may be touched by the user, they must be protected.

Such protection is obtained by utilising a safety transformer to reduce the tension of electrical input of the electronic thermostat. All of the above methods of protection require cost increases.

The aim of the present invention is to indicate how it is possible to realise a command device for refrigerating appliances, in particular the type comprising an electric thermostat and sensor to detect the compartment's internal temperature which does not present the cited drawbacks. To reach this aim the present invention has as its object a device for refrigerating appliances, comprising a temperature sensor that generates an electrical value in function with the temperature of its surroundings and a regulating element in particular an electronic thermostat, that receives and elaborates the electrical value of the internal temperature of at least one of the refrigerating compartments being part of the appliance, characterised by the fact that the sensor is arranged on the external wall of the compartment and buried in the isolation foam between the compartment and the cabinet.

Further aims and advantages of the present invention will become clear from the following detailed description and the annexed drawings supplied as a non-limiting example, wherein:

Figure 1 represents a sectioned view of a known sensor, as used in the state of the art.

Figure 2 represents a sectioned view of the sensor mounting according to the invention.

Figure 3 represents a sectioned view of the sensor mounting according to a implemented variant of the present invention.

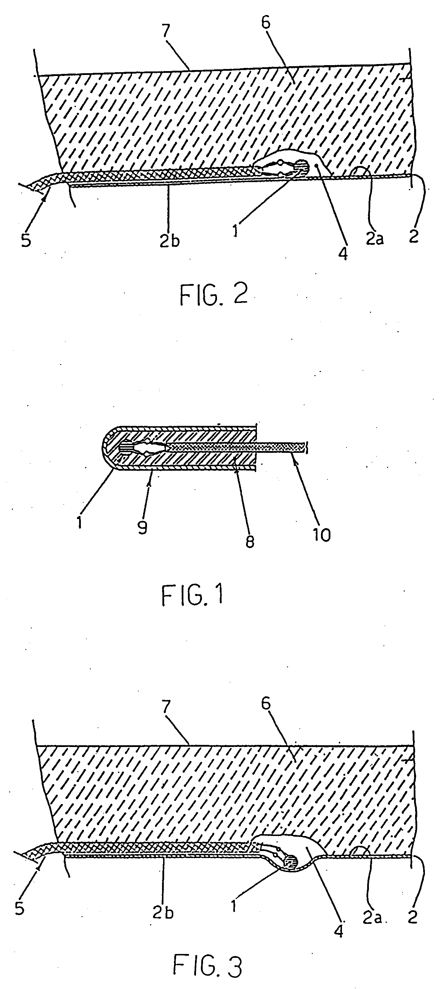

In figure 1, that represents a sectioned view of a kind of sensor currently used, as results from the state of the art, reference number 1 indicates the thermistor, number 3 indicates a connection cable to a electronic thermostat, number 8 indicates a resin that serves in preserving the thermistor 1 from humidity and to guarantee an adequate electrical isolation, while number 9 indicates a cover that contains the above.

The resin 8 must present particular characteristics of compactness and airtightness, necessary so as to guarantee the requirements of isolation against humidity and keep within the aims of electrical security.

In figure 2 the reference number 2 indicates a wall of the compartment of the refrigeration appliance and 2a the external side facing the structure that constitutes the cabinet of the appliance and 2b indicates the internal side, facing the area that constitutes the refrigeration compartment.

A thermistor is distinguished with the number 1, being fixed on the external side 2a by means of a resin of rapid polymerization, indicated with the number 4.

Contrary to the known art, this resin 4 does not have to present any particular characteristics regarding compactness and airtightness.

Infact, the requirements of isolation against humidity and to keep within the aims of electrical security are satisfied by the compartment wall between the thermistor with the cable and the inside of the compartment.

The thermistor 1 is fixed to an electronic thermostat of the type known, that for simplicity is not shown in the figure, by means of a small connecting cable 5.

The reference number 6 indicates a thermic isolation foam between the compartment 2 and a cabinet 7.

The command device according to the present invention functions according to the principle of thermic conductability of materials, that is the quantity of heat conveyed through a wall is directly proportional to the surface, to the time and coefficient to thermic conductability of materials and inversely proportional to the thickness.

Infact the sensor feels the temperature of the external wall of the compartment that is different from the the air inside the compartment. This difference in temperature is related to the thickness and to the type of material of the compartment wall that is inserted between the thermistor and the inside of the compartment.

However, knowing the type of material and the thickness of the compartment wall in the point that the thermistor is arranged and knowing the thermic conductability coefficency of the material, it is possible to know which will be the difference in temperature between the internal and external of the wall.

Therefore, appropriately setting the intervention of the electronic thermostat on the temperature felt by the thermistor, and taking into account the inertness of the temperature transmission between the inside of the compartment and the external surface of the wall, the refrigerating appliance can function with the internal temperature of the compartment being that desired.

The characteristics of the described device become clear from the description and annexed drawings.

From the description the advantages of the command device subject of the present invention are also clear.

In particular they consist in the fact that it is possible to realise a low cost device as it utilizes a thermistor without the process of industrialisation which is the most expensive element regarding the sensor.

Furthermore the fixing means of the sensor on the inside of the compartment and the cable protection starting from the sensor to the electronic thermostat are saved.

By removing the sensor from the inside of the compartment, failures caused by damages created during the removal or placing of food by the user are greatly reduced and an elevated isolation concerning humidity is achieved.

Moreover an elevated electrical isolation is achieved between the thermistor and the inside of the compartment that allows for the elimination of the compartments internal protection and the security transformer, using so as to obtain a low tension input of the electronic thermostat, potential dividers constituted by appropriately dimensioned condensers and resistors that are mounted together to the electronic circuit and whose costs are lower with respect the known solutions.

In addition the elimination of the necessary holes on the compartment for the fixing of the sensor and protection means leads to a more effective protection of the internal foam of the cabinet from humidity.

The absence of needless obstacles on the inside of the compartment also improves the aesthetical aspects.

There is also the possibility to easily realise a sophisticated temperature control device based on the presence of a plurality of sensors due to their low cost.

It is clear that numerous variants are possible by the man skilled in the art, to the command device described as an example, without however leaving the novelty principles inherent to the invention.

As an example, projections could be provided to the wall of the compartment so as to house the thermistor and provide a precise position, as shown in fig.3.

In this way there is a reduction, during the fixing of the themistor, of the possible errors that can influence the constant temperature detection of the compartment.

It is clear that numerous other variants are possible by the man of the art, to the command device described as an example, without however leaving the novelty principles inherent to the invention.

## Claims

1. An improved command device for refrigerating appliances, comprising a temperature sensor that generates an electrical value in function with the temperature of its surroundings and a regulating element in particular an electronic thermostat, that receives and elaborates the electrical value of the internal temperature of at least one of the refrigerating compartments being part of the appliance characterised by the fact that the sensor (1) is placed on the external wall (2a) of the compartment.

2. An improved command device for refrigerating appliances according to claim 1, characterised by the fact that said sesnsor (1) is covered by the isolation foam (6) between the compartment and the cabinet.

3. An improved command device for refrigerating appliances according to claim 1, characterised by the fact that the electrical isolation of the thermistor (1) with respect the area of the compartment of which the user has access is obtained by means of the walls (2) of the compartment.

4. An improved command device for refrigerating appliances according to claim 3, characterised by the fact that the electronic thermostat input tension arrives by means of a potential divider employing resistors and condensors mounted on the printed circuit that also houses the electronic thermostat.

5. An improved command device for refrigerating appliances according to claim 1, characterised by the fact that isolation of the thermistor (1) from humidity is realised through the compartment walls (2).

6. An improved command device for refrigerating appliances according to claim 1, characterised by the fact that the fixing of the thermistor (1) to the compartment walls (2a) is realised with a resin (4) of rapid polymerisation.

7. An improved command device for refrigerating appliances according to claim 1, characterised by the fact that on the compartment walls (2) projections are realised for the positioning of the thermistor (1).

FIG. 2

FIG. 1

FIG. 3